# EUROPÄISCHE PATENTSCHRIFT

(11) **EP 2 644 357 B1**
(45) Veröffentlichungstag und Bekanntmachung des Hinweises auf die Patenterteilung: **22.06.2016**
(21) Anmeldenummer: 13001561.3
(22) Anmeldetag: 26.03.2013
(51) Int. Cl.: B29C 51/16, B29C 51/44

(54) **Verfahren zur Dekoration von Formteilen aus thermoplastischer Kunststofffolie mit Etiketten**
Method for decoration of moulded parts made of a thermoplastic sheet with labels
Procédé de décoration de pièces moulées en feuille de matière synthétique thermoplastique avec des étiquettes

(30) Priorität: 26.03.2012 DE 102012005915
(43) Veröffentlichungstag der Anmeldung: 02.10.2013
(73) Patentinhaber: ILLIG Maschinenbau GmbH & Co. KG, 74081 Heilbronn (DE)
(72) Erfinder: Scheithauer, Michael, 74842 Billigheim (DE)

(56) Entgegenhaltungen:
- EP-A1- 0 525 614
- EP-A1- 0 678 372
- EP-A1- 1 745 911
- WO-A1-96/05040
- DE-A1- 4 323 467

## Beschreibung

Die Erfindung betrifft eine ein Verfahren zur Dekoration von Formteilen aus thermoplastischer Kunststofffolie mit Etiketten nach dem Oberbegriff des Anspruchs 1.

### Stand der Technik

Aus der Druckschrift DE 43 23 467 C2 ist eine Vorrichtung bekannt, bei der ein bedrucktes Label auf mindestens eine Seitenwand eines im Tiefziehverfahren in einer Thermoformmaschine hergestellten Kunststoffbehälters aufgebracht wird, der einen Boden und Seitenwände aufweist, wobei Label mittels eines verfahrbaren Zuteilers in einer den Formnestern des Tiefziehwerkzeug entsprechenden Anzahl mittels einer linear beweglichen Vakuum-Saugplatte aus einem Magazin entnommen und über eine zwischengeschaltete Schwenkeinheit den Formnestem zugeführt werden, wobei dem Magazin an seinem der Vakuum-Saugplatte zugewandten Ende ein zumindest einen Außenrand des aus dem Magazin zu entnehmenden vordersten Labels ansaugendes Separierungsmittel zugeordnet ist.

Der Zuteiler nimmt die flachen Etiketten im erforderlichen Stichmaß der flachen Etiketten vom Magazin ab und schiebt die Elemente des Zuteilers auf das Stichmaß des Formwerkzeugs im flachen Zustand zusammen. Danach werden die Etiketten vorgeformt und damit der Kontur der Kavitäten im Formwerkzeug angepasst. Das begrenzt die Erstreckung der Etiketten im flachen Zustand, so dass nur relativ kleine Etiketten verarbeitet werden können. Etiketten größerer Ausdehnung, wie sie bei Funfseitenetiketten auftritt, können nicht verarbeitet werden. Sie würden sich bei der Vorformung gegenseitig behindern und die Verfügbarkeit und Sicherheit des Verfahrens beeinträchtigen.

Die Druckschrift EP 0 678 372 A1 beschreibt eine Vorrichtung zum Positionieren von Etiketten in Thermoformwerkzeugen, die über eine Station mit Etikettenmagazinen, eine Positionierstation, eine Aufrichtstation und eine Übergabeeinheit in den Schwenktisch mit seinen Formwerkzeugen verfügt. Die Etiketten werden in den Etikettenmagazine bereitgestellt, von einer Lineareinheit mir Saugern ergriffen und in der Positioniereinheit abgelegt, dort korrekt positioniert und in die Aufrichtstation übergeben. In der Aufrichtstation werden die Etiketten vorgeformt durch Formstempel, die eine Negativ-Abformung der Formwerkzeuge bilden. Von der Aufrichtstation werden die Etiketten schließlich in das Formwerkzeug verbracht. Die Vorrichtung kann ein- und zweiseitige Etiketten in einstückiger Form verarbeiten. Dreiseitige Etiketten und Etiketten in mehrstückiger Form sind nicht verarbeitbar.

Die Druckschrift FR 2 432 977 A1 offenbart eine Vorrichtung zur Etikettierung von Behältern durch Thermoformung bei der ein pneumatisch angetriebenes Viergelenk von einem Etikettenstapel bei jedem Takt mit Saugern zwei Etiketten abholt, schwenkt und oberhalb eines Formwerkzeugunterteils positioniert. Im Viergelenkt ist ein u-förmiges Druckstück verbaut, welches vertikal beweglich ist und dessen lichte Weite zwischen den Schenkeln größer ist als der Trennsteg zwischen zwei Kavitäten des Formwerkzeugs. Das Drückstück wird vertikal abgesenkt, die Sauger entlüftet und die Etiketten durch das Druckstück so bewegt, dass sie an einer Seite der Kavität anliegen. Die Vorrichtung kann einseitige und somit einstückige Etiketten verarbeiten. Mehrseitige und mehrstückige Etiketten sind nicht verarbeitbar.

Die Druckschrift EP 1745 911 A1 schlägt ein Verfahren und eine Maschine vor, bei dem bzw. bei der Label für ein Inmouldlabeling-System bereitgestellt werden. Ein Label wird von einem Stapel mit Saugern abgehoben und über eine Form platziert. Die äußeren Sauger werden entlüftet und der innere Sauger abgesenkt. Das Label biegt sich aufgrund seiner Steifigkeit in die kreisförmige Form hinein und wird dort mit Unterdruck angesaugt und somit fixiert. Anschließend wird es an die eigentliche Form übergeben, indem die Etikettierung durchgeführt wird.

Die Druckschrift WO 96/05040 zeigt ein Verfahren zur Inmould-Etikettierung, bei dem Abwicklungen für die einzelnen Seiten der Formteile bereitgestellt werden. Es werden jeweils mehrere Formteile pro Arbeitstakt geformt. Über Stanzwerkzeuge werden eine Vielzahl von Abwicklungen bereitgestellt, wobei dann mehrere Abwicklungen in die Formwerkzeuge verbracht werden, damit sämtliche Formteile auf allen Seiten dekoriert werden.

Die Druckschrift EP 0 525 614 A1 zeigt ein Verfahren und eine Vorrichtung zum Herstellen eines Kunststoffgefässes und ein so hergestelltes Kunststoffgefäss, bei dem das Etikett ebenfalls aus Kunststoff besteht und so der etikettierte Artikel als Einstoffartikel angesehen werden kann. Von einem Stapel werden Etiketten abgezogen und auf ein Drehkreuz aufgegeben. Das Drehkreuz dreht sich bei einem Arbeitstakt um 90° und übergibt die Etiketten an das Formwerkzeug, in dem das Formteil geformt und gleichzeitig etikettiert wird. Nach dem Etikettieren übernimmt das Drehkreuz die dekorierten Formteile wieder aus dem Formwerkzeug und legt es nach mehreren Arbeitstakten auf einem Transportband ab.

### Aufgabenstellung

Der Erfindung liegt die Aufgabe zugrunde die bekannten Verfahren zur Dekoration von Formteilen mit Etiketten zu verbessern.

Gelöst ist diese Aufgabe erfindungsgemäß durch die im Kennzeichen des Anspruches 1 angegebenen Maßnahmen. Weitere bevorzugte Ausgestaltungen der Erfindung ergeben sich aus übrigen, in den jeweiligen Unteransprüchen genannten Merkmalen.

### Ausführungsbeispiel

Vorgeschlagen wird eine Vorrichtung zur Dekoration von Formteilen **2** aus thermoplastischer Kunststofffolie mit Etiketten **1,** wobei die Vorrichtung ein Magazin **4** zum Bevorraten von Etikettenstapeln **5,** eine Einrichtung **6** zum Vereinzeln von Etiketten **1** von den Etikettenstapeln **5,** eine Einrichtung **7** zum Teilaufrichten von Etiketten **1,** eine Einrichtung **13,** die die Etiketten **1** vom Stichmass des Magazins **4** auf das Stichmass des Formwerkzeugs **10** oder Form/Stanzwerkzeug **11** zusammenschiebt, eine Einrichtung **9** zum Fertigaufrichten von Etiketten **1** und eine Transfereinheit **8** zum Übergeben der etikettierten Formteile **17** an ein Formwerkzeug **10** oder Form/Stanzwerkzeug **11** aufweist.
Es ist vorgesehen, dass die Vorrichtung in eine Thermoformmaschine **3** integriert oder einer Thermoformmaschine **3** nachgeschaltet ist.
Weiterhin ist vorgesehen, dass die Etiketten **1** als gestanzte oder geschnittene Flachetiketten ausgebildet sind.
Die Etiketten **1** sind als dabei als ein- oder mehrteilige Elemente ausgebildet. Bekannte Ausführungsformen sind dabei ein- bis fünfseitige Etiketten **1** in einstückiger Form. Beispielsweise fünfseitige Etiketten **1,** die einen Bodenteil und vier Seitenteile aufweisen. Ebenso verarbeitet die Vorrichtung mehrteilige Etiketten **1.** Beispielsweise für Formteile **2** mit einem Brust-, einem Rücken- und einem Bodenetikett.
Das Magazin **4** weist in vorteilhafter Weise zur Bevorratung von Etikettenstapeln **5** auswechselbare, modulare Magazinformatteile **12 auf.** Das Magazin **4** Weist dabei ein verstellbares Raster auf mit Aufnahmeelementen, die mit Ausnehmungen in den Magazinformatteilen **12** zusammenwirken und so die Magazinformatteile **12** im Raster des Magazins **4** aufnehmen und fixieren. Der Bediener stellt dabei das Raster ein in Abhängigkeit von der Anzahl der Kavitäten im Formwerkzeug **10** oder Form/Stanzwerkzeug **11** der Thermoformmaschine **3.** Die Magazinformatteile **12** sind vorteilhafter Weise mit Schnellwechselsystemen ausgerüstet.
Die bekannten Systeme im Markt weisen teilweise ungünstig zu bedienende Magazine auf. Deshalb ist es weiterhin vorgesehen, dass die Aufnahmefläche für die Magazinformatteile **12** des Magazins **4** einen ergonomisch günstigen Winkelbereich von 5° bis 30° zur Senkrechten aufweist. Der Bediener kann so in bequemer Position die Etiketten **1** nachladen.
Die Vorrichtung ist kompakt. Deshalb ist die Vorrichtung relativ zur Thermoformmaschine **3** in Produktionsrichtung verschiebbar ausgeführt. So kann der Bediener bei Störungen die Vorrichtung von der Thermoformmaschine **3** in Produktionsrichtung entfernen und entstören.
Die Einrichtung **7** zum Teilaufrichten der Etiketten **1** ist in jeder Aufnahmeeinrichtung für die Etiketten **1** in der Einrichtung **13,** die die Etiketten **1** vom Stichmass des Magazins **4** auf das Stichmass des Formwerkzeugs **10** oder Form/Stanzwerkzeugs **11** zusammenschiebt, eingebaut. Die Einrichtung **13** ist dabei als Einheit aufgebaut, die angetriebene Verschiebeeinheiten in Produktionsrichtung und quer dazu aufweist. Die Transfereinheit **8** ist vorteilhafter Weise mit Saugdornen **14** für Etiketten **1** ausgerüstet.
In einer anderen Ausführung weist die Transfereinheit **8** eine Seite auf, die mit Saugdornen **14** für Etiketten **1** und eine Gegenseite, die mit Saugern **15** für etikettierte Formteile **17** ausgerüstet ist. Damit bedient die Transfereinheit **8** in dieser vorteilhaften Ausführung mit der einen Seite das Formwerkzeug **10** oder Form/Stanzwerkzeug **11** und belädt es mit fertig aufgerichteten Etiketten **1.** Mit der anderen Seite entnimmt die Transfereinheit **8** aus dem Formwerkzeug **10** oder Form/Stanzwerkzeug **11** die etikettierten Formteile **17** nach dem kombinierten Form/Etikettierprozess in der Thermoformmaschine **3.**
Ebenfalls nimmt die Transfereinheit **8** die Einrichtung **9** zum Fertigaufrichten von Etiketten **1** auf.
Es ist vorgesehen, dass die Vorrichtung ein erstes Handling **16** aufweist zur Abnahme der etikettierten Formteile **17** von der Transfereinheit **8.** Dabei weist das erste Handling **16** eine Einrichtung **18** auf zum Distanzieren der etikettierten Formteile **17** von einander. Die Distanz der etikettierten Formteile **17** von einander erlaubt eine automatisierte Inspektion der korrekten Platzierung der Etiketten **1** auf den Formteilen **2.** Deshalb ist eine Kamera **19** zur Inspektion der korrekten Etikettenplatzierung vorgesehen.
Ein zweites Handling **21** ist vorgesehen zur Entfernung der etikettierten Formteile **17** mit unkorrekter Etikettenplatzierung.
Zuletzt ist eine Einrichtung **22** vorgesehen zur Bildung von Formteilstapeln **23.**

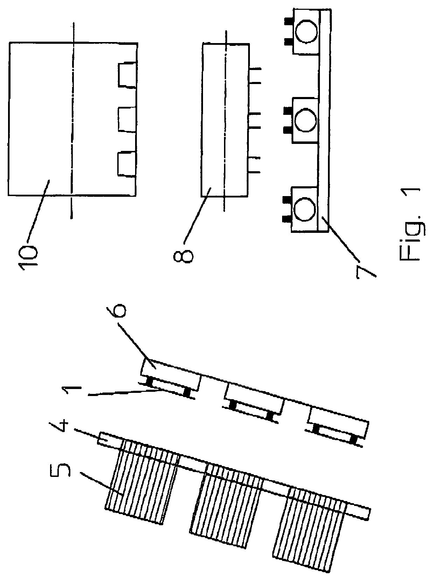

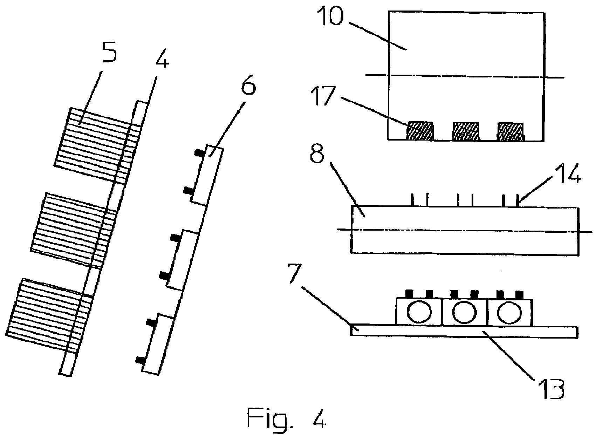

Weitere Einzelheiten der Erfindung sind nachfolgend anhand der schematischen Zeichnungen näher beschrieben. Die **Fig.** 1 -4 zeigen den Ablauf des Verfahrens gemäß dem Anspruch 1:
**Fig.** 1 zeigt den ersten Teilschritt des Verfahrens zur Dekoration von Formteilen mit Etiketten. Im Magazin **4** werden Etiketten **1** in Etikettenstapeln **5** bereitgestellt. Die Einrichtung **6** zum Vereinzeln von Etiketten **1** nimmt von den Etikettenstapeln **5** die jeweils unterste Etikette **1** ab.

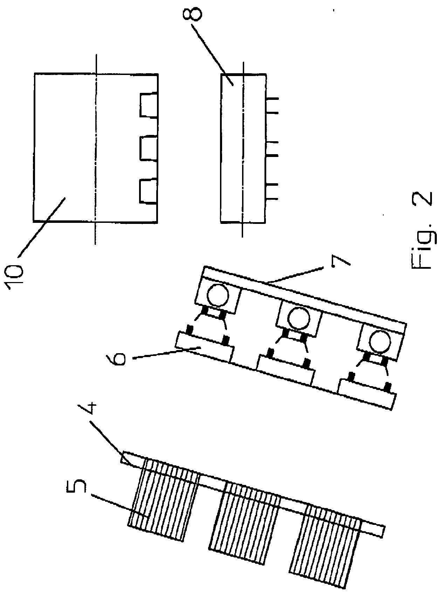

**Fig.** 2 zeigt den zweiten Teilschritt des Verfahrens. Die Einrichtung **6** zum Vereinzeln von Etiketten **1** übergibt die Etiketten **1** an die Einrichtung **7** zum Teilaufrichten der Etiketten **1.** Die Einrichtung 7 übernimmt dabei die Etiketten **1** und richtet die flachen Etiketten **1** mindestens teilweise auf. Dadurch verkürzt sich die Erstreckung der Etiketten **1** gegenüber der Erstreckung der Etiketten **1** im flachen, nicht aufgerichteten Zustand.

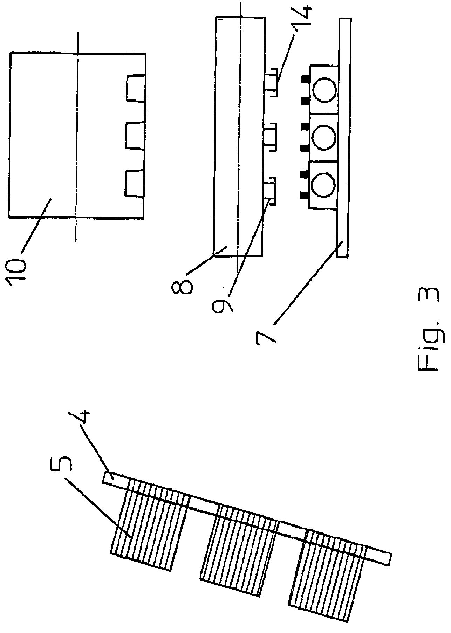

**Fig.** 3 zeigt den dritten Teilschritt des Verfahrens. Die Einrichtung **13** zum Zusammenschieben schiebt die teilaufgerichteten Etiketten **1** vom Stichmass des Magazins **4** auf das Stichmass des Formwerkzeugs **10** oder des Form/Stanzwerkzeugs **11** und übergibt die mindestens teilaufgerichteten Etiketten **1** an die Transfereinheit **8,** die mit Einrichtungen **9** zum Fertigaufrichten ausgerüstet ist. Die Transfereinheit **8** übernimmt die Etiketten **1** und richtet sie bei Bedarf vollständig auf.
   Die Schritte in **Fig.** 3 zeigen die verschiedenen Möglichkeiten bei ein- und mehrstückigen Etiketten **1.** Die Einrichtung **7** zum Teilaufrichten der Etiketten **1** richtet einstückige Etiketten **1** teilweise auf und mehrstückige Etiketten **1** vollständig auf. Die Transfereinheit **8** richtet die einstückigen Etiketten **1** vollständig auf, die mehrstückigen Etiketten **1** übernimmt sie bereits vollständig aufgerichtet.
**Fig.** 4 zeigt den vierten Teilschritt des Verfahrens. Die Transfereinheit **8** übergibt die vollständig aufgerichteten Etiketten an ein Formwerkzeug **10** oder Form/Stanzwerkzeug **11.** Im Formwerkzeug **10** oder Form/Stanzwerkzeug **11** wird die erwärmte Kunststofffolie mit den Etiketten **1** in Kontakt gebracht und mit den Etiketten **1** fest verbunden.
Die **Fig.** 5 - 7 zeigen vorteilhafte Ausführungen

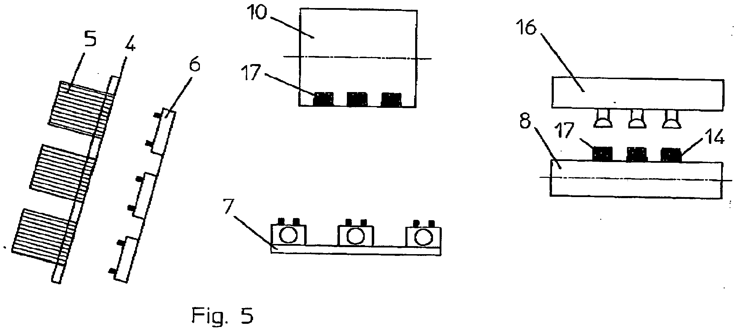

   **Fig.** 5 zeigt einen ersten Schritt einer vorteilhaften Ausgestaltung für eine in der Figur nicht dargestellte Thermoformmaschine **3** mit einem Form/Stanzwerkzeug **11.** Die Transfereinheit **8** entnimmt die etikettierten Formteile **17** aus dem Form/Stanzwerkzeug **11.**

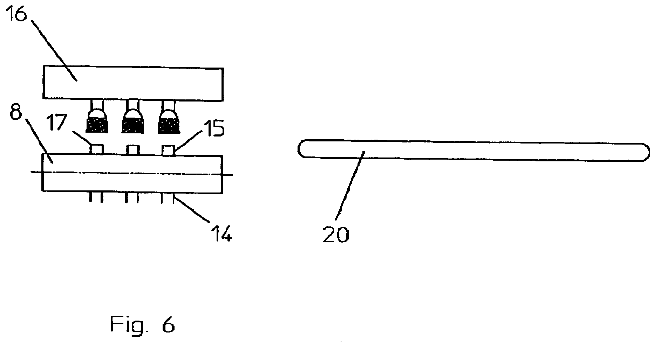

   **Fig.** 6 zeigt den zweiten Schritt einer vorteilhaften Ausgestaltung. Ein erstes Handling **16** nimmt die etikettierten Formteile **17** von der Transfereinheit **8** ab und setzt sie auf ein Transportband **20.** Während der Transferbewegung vergrößert das erste Handling **16** durch eine Spreizbewegung die Abstände der etikettierten Formteile **17** voneinander.

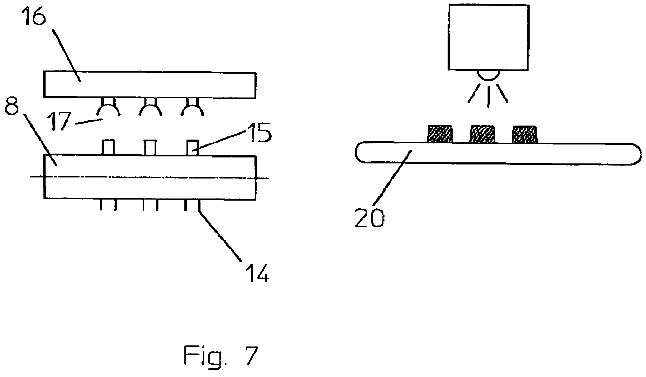

   **Fig.** 7 zeigt den dritten Schritt einer vorteilhaften Ausgestaltung. Eine Kamera **19** kontrolliert den korrekten Sitz der Etiketten **1** auf den etikettierten Formteile **17.**

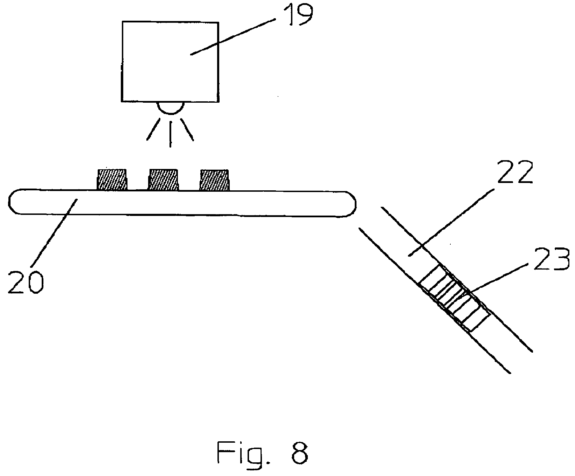

**Fig.** 8 zeigt den vierten Schritt einer vorteilhaften Ausgestaltung. Ein zweites, nicht dargestelltes, Handling **21** entnimmt die etikettierten Formteile **17,** deren Sitz der Etiketten 1 die Kamera **19** nicht als korrekt bewertet hat, vom Transportband **20.** Das Transportband **20** führt die verbleibenden etikettierten Formteile **17** einer Einrichtung **22** zur Bildung von Formteilstapeln zu.

### Bezugszeichenliste

- 1: Etikett
- 2: Formteil
- 3: Thermoformmaschine
- 4: Magazin
- 5: Etikettenstapel
- 6: Einrichtung zum Vereinzeln von Etiketten
- 7: Einrichtung zum Teilaufrichten
- 8: Transfereinheit
- 9: Einrichtung zum vollständigen Aufrichten
- 10: Formwerkzeug
- 11: Form/Stanzwerkzeug
- 12: Magazinformatteile
- 13: Einrichtung zum Zusammenschieben
- 14: Saugdorne für Etiketten
- 15: Sauger für etikettierte Formteile
- 16: Erstes Handling
- 17: Etikettiertes Formteil
- 18: Einrichtung zum Distanzieren
- 19: Kamera
- 20: Transportband
- 21: Zweites Handling
- 22: Einrichtung zur Bildung von Formteilstapeln
- 23: Formteilstapel

## Patentansprüche

1. Verfahren zum Betreiben einer Vorrichtung zum Dekorieren von in einer Thermoformmaschine aus thermoplastischer Kunststofffolie geformten oder geformt und gestanzten Formteilen, **dadurch gekennzeichnet, dass** eine Einrichtung **6** zum Vereinzeln von Etiketten **1** von Etikettenstapeln **5** aus einem Magazin **4** jeweils unterste Etiketten **1** abnimmt und die Etiketten **1** an eine Einrichtung **7** zum Teilaufrichten der nebeneinander angeordneten Etiketten **1** übergibt, wobei die Einrichtung **7** dabei die flachen, nebeneinander angeordneten Etiketten **1** übernimmt und mindestens teilweise aufrichtet, wobei sich die Erstreckung der nebeneinander angeordneten teilaufgerichteten Etiketten **1** gegenüber der Erstreckung der nebeneinander angeordneten Etiketten **1** im flachen, nicht aufgerichteten Zustand verkürzt und eine Einrichtung **13** zum Zusammenschieben schiebt die teilaufgerichteten nebeneinander angeordneten Etiketten **1** vom Stichmass des Magazins **4** auf das Stichmass des Formwerkzeugs **10** oder des Form/Stanzwerkzeugs **11** und übergibt die mindestens teilaufgerichteten nebeneinander angeordneten Etiketten **1** an eine Transfereinheit **8,** die mit Einrichtungen **9** zum Fertigaufrichten ausgerüstet ist, wobei die Transfereinheit **8** die nebeneinander angeordneten Etiketten **1** übernimmt und sie bei Bedarf vollständig aufrichtet, wobei die Einrichtung **7** zum Teilaufrichten der nebeneinander angeordneten Etiketten **1** einstückige nebeneinander angeordnete Etiketten **1** teilweise aufrichtet und mehrstückige nebeneinander angeordnete Etiketten **1** vollständig aufrichtet und wobei die Transfereinheit **8** die einstückigen nebeneinander angeordneten Etiketten **1** vollständig aufrichtet und die mehrstückigen nebeneinander angeordneten Etiketten **1** bereits vollständig aufgerichtet übernimmt und wobei die Transfereinheit **8** die vollständig aufgerichteten nebeneinander angeordneten Etiketten an ein Formwerkzeug **10** oder Form/Stanzwerkzeug **11** übergibt und im Formwerkzeug **10** oder Form/Stanzwerkzeug **11** die erwärmte Kunststofffolie mit den Etiketten **1** in Kontakt gebracht und mit den Etiketten **1** fest verbunden wird.

2. Verfahren nach Anspruch 1, **dadurch gekennzeichnet, dass** die Transfereinheit (8) im Zusammenspiel mit einem Form-/Stanzwerkzeug (11) zuerst etikettierte Formteile (17) aus einem Form-/Stanzwerkzeug (11) entnimmt und anschließend aufgerichtete Etiketten (1) an das Form/Stanzwerkzeug (11) übergibt.

3. Verfahren nach Anspruch 1, **dadurch gekennzeichnet, dass** ein erstes Handling (16) die etikettierten Formteile (17) von der Transfereinheit (8) abnimmt.

4. Verfahren nach Anspruch 1, **dadurch gekennzeichnet, dass** das erste Handling (16) die etikettierten Formteile (17) von einander distanziert.

5. Verfahren nach Anspruch 1, **dadurch gekennzeichnet, dass** das erste Handling (16) die etikettierten und distanzierten etikettierten Formteile (17) auf einem Transportband (20) absetzt.

6. Verfahren nach Anspruch 1, **dadurch gekennzeichnet, dass** eine Kamera (19) die korrekte Etikettenplatzierung prüft.

7. Verfahren nach Anspruch 1, **dadurch gekennzeichnet, dass** ein zweites Handling (21) die etikettierten Formteile (17) mit unkorrekter Etikettenplatzierung von einem Transportband (20) entfernt.

8. Verfahren nach Anspruch 1, **dadurch gekennzeichnet, dass** das Transportband (20) die etikettierten Formteile (17) zu einer Einrichtung (22) zur Bildung von Formteilstapeln transportiert.

## Claims

1. Method for operating a device for decorating formed parts from thermoplastic film in a thermoforming machine or formed and punched parts, **characterised in that** a device **6** for separating labels **1** from stacks of labels **5** in a magazine **4** selects in each case the lowest labels **1** and transfers the labels **1** to a device **7** for partially aligning the juxtaposed labels **1,** whereby in doing so the device **7** accepts the flat, juxtaposed labels **1** and at least partially aligns them, whereby the extension of the juxtaposed, partially aligned labels **1** is shortened towards the extension of the juxtaposed labels **1** in a flat, non-aligned state and a device **13** for pushing together pushes the partially aligned, juxtaposed labels **1** from the magazine's cavity spacing **4** to the cavity spacing of the forming tool **10** or of the forming / punching tool **11** and transfers the at least partially aligned, juxtaposed labels **1** to a transfer unit **8,** which is equipped with devices **9** for final alignment, whereby such transfer unit **8** accepts the juxtaposed labels **1** and fully aligns them as necessary, whereby the device **7** for partial alignment of the juxtaposed labels **1** partially aligns one-piece juxtaposed labels **1** and fully aligns multiple-piece juxtaposed labels **1** and whereby the transfer unit **8** fully aligns one-piece juxtaposed labels **1** and accepts the multiple-piece juxtaposed labels **1** that have already been fully aligned and whereby the transfer unit **8** transfers the fully aligned, juxtaposed labels to a forming tool **10** or forming / punching tool **11** and, in the forming tool **10** or forming / punching tool **11,** the heated plastic film is brought into contact with the labels **1** and is firmly connected with the labels **1.**

2. Method according to claim 1, **characterised in that** the transfer unit (8) in collaboration with a forming / punching tool (11) firstly takes labelled parts (17) from a forming / punching tool (11) and then transfers aligned labels (1) to the forming / punching tool (11).

3. Method according to claim 1, **characterised in that** an initial handling unit (16) accepts the labelled parts (17) from the transfer unit (8).

4. Method according to claim 1, **characterised in that** the initial handling unit (16) distances the labelled parts (17) from one another.

5. Method according to claim 1, **characterised in that** the initial handling unit (16) places the labelled parts (17) onto a conveyor belt (20).

6. Method according to claim 1, **characterised in that** a camera (19) checks correct placement of the labels.

7. Method according to claim 1, **characterised in that** a second handling unit (21) removes labelled parts (17) with labels that are placed incorrectly from the conveyor belt (20).

8. Method according to claim 1, **characterised in that** the conveyor belt (20) transports the labelled parts (17) to a device (22) for stacking products.

## Revendications

1. Procédé d'exploitation d'un dispositif de décoration de pièces formées dans une machine de thermoformage à partir d'un film thermoplastique ou formées et découpées, **caractérisé en ce qu**'un dispositif **6,** destiné à séparer des étiquettes **1** de piles d'étiquettes **5** dans un magasin **4,** retire respectivement les étiquettes **1** les plus basses et transmette les étiquettes **1** à un dispositif **7,** permettant de dresser partiellement les étiquettes **1** juxtaposées, alors que le dispositif **7** prend en charge les étiquettes **1** juxtaposées à plat, et les redresse au moins partiellement, l'étendue des étiquettes **1,** juxtaposées et partiellement redressées, étant réduite par rapport à l'étendue des étiquettes **1,** juxtaposées à plat et non dressées et un dispositif **13** de coulissement poussant les étiquettes **1** juxtaposées partiellement dressées, de l'entraxe du magasin **4** sur l'entraxe de l'outil de formage **10** ou de l'outil de formage / de découpe **11** et transmettant les étiquettes **1,** juxtaposées au moins partiellement dressées, à une unité de transfert **8,** équipée des dispositifs **9** permettant de terminer le redressement, alors que l'unité de transfert **8** prend en charge les étiquettes **1** juxtaposées et, si nécessaire, les redresse intégralement, le dispositif **7,** permettant de redresser partiellement les étiquettes **1** juxtaposées, redressant partiellement les étiquettes **1** d'une seule pièce, juxtaposées et redressant intégralement les étiquettes **1** en plusieurs pièces, juxtaposées et l'unité de transfert **8** dressant intégralement les étiquettes **1** d'une seule pièce, juxtaposées et prenant en charge les étiquettes **1** en plusieurs pièces, juxtaposées, qui sont déjà intégralement dressées, et l'unité de transfert **8** transmettant les étiquettes intégralement dressées, juxtaposées, à un outil de formage **10** ou à un outil de formage / de découpe **11** et mettant en contact, dans l'outil de formage **10** ou dans l'outil de formage / de découpe **11,** le film thermoplastique chauffé avec les étiquettes **1** et le reliant solidement aux étiquettes **1.**

2. Procédé selon la revendication 1, **caractérisé en ce que** l'unité de transfert (8) prélève, en combinaison avec un outil de formage / de découpe (11), tout d'abord des pièces formées étiquetées (17) d'un outil de formage / de découpe (11) puis transmette des étiquettes (1) dressées à l'outil de formage / de découpe (11).

3. Procédé selon la revendication 1, **caractérisé en ce qu**'un premier manipulateur (16) retire les pièces formées étiquetées (17) de l'unité de transfert (8).

4. Procédé selon la revendication 1, **caractérisé en ce que** le premier manipulateur (16) espace les pièces formées étiquetées (17) les unes des autres.

5. Procédé selon la revendication 1, **caractérisé en ce que** le premier manipulateur (16) dépose les pièces formées étiquetées et distancées (17) sur un tapis de transport (20).

6. Procédé selon la revendication 1, **caractérisé en ce qu**'une caméra (19) vérifie le bon placement de l'étiquette.

7. Procédé selon la revendication 1, **caractérisé en ce qu'un** second manipulateur (21) enlève les pièces formées étiquetées (17) qui présentent un placement incorrect de l'étiquette, d'un tapis de transport (20).

8. Procédé selon la revendication 1, **caractérisé en ce que** le tapis de transport (20) transporte les pièces formées étiquetées (17) vers un dispositif (22), pour former des piles de pièces formées.
